(19) Europäisches Patentamt / European Patent Office / Office européen des brevets

(11) **EP 2 693 918 B1**

(12) **EUROPEAN PATENT SPECIFICATION**

(45) Date of publication and mention
of the grant of the patent:
**21.08.2019  Bulletin 2019/34**

(51) Int Cl.:
**D06N 7/00** *(2006.01)*        **B32B 37/06** *(2006.01)*
**D06M 10/00** *(2006.01)*      **H05B 6/80** *(2006.01)*

(21) Application number: **12767820.9**

(86) International application number:
**PCT/AU2012/000352**

(22) Date of filing: **05.04.2012**

(87) International publication number:
**WO 2012/135909 (11.10.2012 Gazette 2012/41)**

(54) **MICROWAVE CURING OF UNCURED LATEX CARPET**

MIKROWELLENHÄRTUNG EINES NICHT GEHÄRTETEN LATEXTEPPICHS

DURCISSEMENT PAR MICRO-ONDES DE MOQUETTE À BASE DE LATEX NON DURCI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.04.2011  AU 2011901294**

(43) Date of publication of application:
**12.02.2014  Bulletin 2014/07**

(73) Proprietor: **Interface Aust Pty Limited
Surry Hills, NSW 2010 (AU)**

(72) Inventor: **BOYD, Michael, Lindsay
Picton, NSW 2571 (AU)**

(74) Representative: **Schwöbel, Thilo K. et al
Kutzenberger Wolff & Partner
Waidmarkt 11
50676 Köln (DE)**

(56) References cited:
**WO-A1-2007/075279        WO-A1-2009/059366
WO-A2-2008/124449        GB-A- 1 267 654
US-A- 4 689 256            US-A- 4 798 644
US-A1- 2007 082 172        US-B1- 7 368 692**

## Description

### Technical Field

The present invention relates to method of microwave curing of an uncured precoated carpet and to the carpet produced thereby. An apparatus for curing uncured precoated carpet.

### Background of the Invention

Carpets, such as free-lay carpet or backed carpet tiles are typically prepared as either a tufted or a fusion bonded carpet material having a wear fibrous or pile surface from which pile yarns upwardly project. Carpet tiles differ from the production of ordinary tufted or other fibrous-faced carpets because there is no requirement on a typical carpet for a heavy backing layer. In a carpet tile, a rigid stabilized mass of a thermoplastic backing layer is generally required in order to hold down the carpet tile so that it can function as a free-lay carpet tile. Generally, the backing layer has a high filler content (e.g., limestone) and is employed with various scrim materials such as glass fibres, polyester or a combinations thereof, to impart dimensional stability. Generally the thermoplastic backing layer is one or more polyvinyl chloride layers.

As an example, a tufted carpet tile generally comprises a primary backing base sheet material such as polyester or polypropylene having a plurality of tufted yarns such as Nylon® through the primary backing to form a wear surface of loop or cut pile (carpet pile). The primary backing is used to tuft the carpet yarn into and to provide the required top cloth of the product. A precoat of a latex type material such as EVA (polyethylene vinyl acetate) or carboxylated styrene-butadiene-styrene may be applied on the back (underside) surface to bond the yarn to the primary backing and to aid in the securing of the primary backing to the backing layer. The backing layer may be comprised of a first PVC layer, a fiberglass layer and a second PVC layer (reback layer) - the first layer of PVC bonding the primary backing to the fiberglass layer, the fiberglass layer ensuring dimensional stability of the carpet tile and the second layer of PVC gluing the layers above it and providing the final backing of the carpet tile.

Fusion-bonded carpet generally has a similar backing to tufted carpet except that the fusion-bonded carpet has a plurality of cut pile yarns of nylon or other suitable fibrous material implanted in an adhesive layer, particularly thermoplastic such as PVC or hot-melt adhesive, which may be further laminated to a reinforcement or substrate layer of a woven or non-woven material such as fibreglass, Nylon®, polypropylene or polyester. The plurality of fibrous yarns are bonded to and extend generally upright from the adhesive base layer to form the wear surface.

In the process of production of carpet tiles generally the uncured precoated layer is applied to the primary backing, suitably a latex which is typically cured by heating. Heating is typically achieved by forwarding the coated primary backing through an oven where hot air flows over the precoat to cure the precoat. This heating method takes time and the heating is not always uniform. Heating is typically made by natural gas direct fired latex curing ovens. Natural gas is a non-renewable energy source.

In the context of the present invention, reference can be made to US 4,798,644 A and GB 1 267 654 A.

### Object of the Invention

It is an object of the present invention to substantially overcome or at least ameliorate one or more of the above disadvantages or at least provide a suitable alternative.

### Definitions

The following are some definitions that may be helpful in understanding the description of the present invention. These are intended as general definitions and should in no way limit the scope of the present invention to those terms alone, but are put forth for a better understanding of the following description.

Unless the context requires otherwise or specifically stated to the contrary, integers, steps, or elements of the invention recited herein as singular integers, steps or elements clearly encompass both singular and plural forms of the recited integers, steps or elements.

Throughout this specification, unless the context requires otherwise, the word "comprise", or variations such as "comprises" or "comprising", will be understood to imply the inclusion of a stated step or element or integer or group of steps or elements or integers, but not the exclusion of any other step or element or integer or group of elements or integers. Thus, in the context of this specification, the term "comprising" means "including principally, but not necessarily solely".

The information provided herein and references cited are provided solely to assist the understanding of the reader, and do not constitute an admission that any of the references or information is prior art to the present invention.

The term "filament" or "filaments" means strands of extreme or indefinite length.
The term "yarn" means a collection of numerous filaments which may or may not be entangled, twisted or laid together.
The term "texturing" means any operation of filaments which results in crimping, looping or otherwise modifying such filaments to increase cover, resilience, bulk or to provide a different surface texture or hand. It follows that a "bulked continuous filament" is a filament which has been subjected to one or more "texturing" operation(s).
By "biobased" is meant that the relevant material is made from substances derived from living matter.
A biobased fibre is herein defined as a fibre comprised of a polymer, or a blend or alloy of two or more polymers, in which one or more of said polymers has as at least one of the components making up the macromolecule thereof a substance ultimately derived wholly or partially from a biological, renewable, source. Such source may, for example, be a plant, or part of said plant such as roots, stems, leaves, flowers or seeds.
It will be understood that although the description of the carpet or carpet tile of the present invention has been given in terms of "layers", that following processing the carpet tile is a bonded unitary integral structure in which the individual layers are not necessarily readily discernible or removable from one another.

## Summary of the Invention

There is
provided a method of making a floor covering comprising:

tufting or implanting a fibrous material or yarn into a primary backing;
precoating the underside of the primary backing layer by applying a precoating composition followed by microwave curing the precoating.

There is further provided a method of making a floor covering comprising:

tufting or implanting a fibrous material or yarn into a primary backing;
precoating the underside of the primary backing layer by applying a precoating composition followed by microwave curing the precoating;
applying a backing layer to the precoated primary backing layer; and
if necessary curing the backing layer.

There is yet further provided a method of making a floor covering comprising:

coating a first layer of a thermoplastic resin plastisol on a support surface;
optionally placing a dimensionally stable sheet material onto the top surface of the first layer and heating the layer to gel the layer and position the sheet material;
optionally applying a second layer of a thermoplastic resin plastisol onto the gelled surface of the first layer;
tufting or implanting a fibrous material or yarn into a primary backing material;
precoating the underside of the primary backing and curing the precoating using microwaves;
optionally coating a thermoplastic resin plastisol over the precoat layer;
layering the precoated primary backing onto the top surface of the plastisol of the first or second thermoplastic resin layer to form a floor covering;
heating the floor covering so formed to fuse the thermoplastic layers into an integrally-fused backing layer;
cooling the flooring covering; and
optionally cutting the floor covering into a carpet tile.

The methods are conducted continuously.
The present inventors have found that microwaves can be used effectively as a substitute form of energy instead of natural gas direct fired latex curing ovens in the heating and drying processes used in curing latex in making carpets/carpet tiles. Microwave technology can be used to replace existing traditionally natural gas fired latex curing ovens with energy efficient microwave web curing ovens.

Fibrous material or Yarn

The yarn may be a spun yarn, drawn filament, multifilament or bulked continuous yarn. The yarn may be textured and may be finished.
The yarn or fibrous material may be any suitable yarn or fibrous material employed in the floor coverings. Such fibrous materials and yarns may include synthetic, natural or a combination of synthetic and natural fibre, such as but not limited to polyamides like nylon, olefins like polypropylene, wool and wool blends, cotton, acrylic, acrylic-nylon blends, polyester yarns and combinations and blends thereof. The yarns/fibrous materials may be used to form face or back yarn with the primary backing.

In one embodiment, the yarn is formed from a biobased fibre. For example, a biobased polyhexamethylene sebacamide polymer. One suitable polymer is Ultramid Balance 6, 10 available from BASF. This material is a polyamide 6, 10 based on over 60% on sebacic acid derived from castor oil, which is itself a renewable resource obtained from the seeds of *Ricinus Communis.* Suitably the polymer is 63% biobased. In one embodiment the biobased polyhexamethylene sebacamide polymer is blended with up to 80wt% of at least one polymer compatible with the biobased polyhexamethylene sebacamide polymer. Suitable polymers for blending with the biobased polyhexamethylene sebacamide polymer include, but are not limited to nylon 6,6 or nylon 6,12.

Other optional additives which may be added to the yarn/fibrous material include, but are not limited to, one or more of antistatics, antioxidants, antimicrobials, flameproofing agents, colourants, delustering agents, stabilisers, stain blockers and lubricants.

The colourant may be any suitable pigment and may be chosen from organic and/or inorganic classes. In one embodiment the pigment is at least one pigment chosen from among: quinacridone magenta PR202, perylene red PR178, iron oxide red PR101, zinc iron yellow PY119, nickel azo yellow PY150, phthalocyanine green PG7, phthalocyanine blue PB15:1, titanium dioxide PW6 and carbon black PBlk7. The range of colourant to be added is typically bounded by a functional minimum below which appearance or lightfastness is unsuitable or a functional maximum at which chromatic saturation is achieved. While different for each of the aforenamed inorganic and organic colourants, a typical minimum of 0.05wt% and a typical maximum of 2.5wt% may be encountered.

Primary backing layer

The primary backing may be a tufted fibrous layer or a fusion bonded material. When a tufted fibrous layer is used, it may be prepared by feeding the primary backing material to a conventional tufting machine which tufts fibres through interstices in the material. Tufting is typically performed such the resulting tufts protrude from the underside face with back stitches which hold the tufts in place on the topside of the material during processing.

The primary backing is suitably formed from a woven or non-woven synthetic or non-synthetic fibre. Suitably a thermoplastic backing such as a woven polypropylene backing or a non-woven polyester, with a fibrous face or wear surface such as a tufted face, and a fibrous back surface, such as a loop or tufted surface where the carpet tile is tufted is used. A polyester such as Lutradur® is preferably used when making a PVC backed floor covering because it does not suffer too much from shrinkage due to heat during the gelling process thus minimizing the risk of tile uplift due to not enough drape. Other suitable backings include Nylon®, fibreglass, cotton, jute, rayon, paper, natural or synthetic rubbers, sponge or foam rubbers, polychloroprene, acrylonitrile-butadiene copolymers, ethylene-propylene-diene rubbers, petroleum resin, vinyl polymers (such as polyvinylchloride, polyvinylidene chloride, polyvinyl acetate, polyvinyl acetal, polyvinyl butyral, copolymers or mixtures thereof), polybutene resin, polyisobutene-butadiene resins and copolymers and mixtures thereof.

For a fusion bonded carpet tile, the fibrous material and yarns employed in the carpet tile are implanted into a material such as PVC or a hot melt adhesive which may be laminated to a substrate such as a woven or nonwoven material such as fibreglass, Nylon®, polypropylene or polyester.

Precoat

The primary backing layer is precoated with latex prior to applying a backing layer. Typically the precoat is applied to cover the loop backs and to lock in the loops.

The latex may be an EVA latex or another vinyl polymer or acrylic-like polymer latex. For example, the latex may be a copolymer of acrylic and methacrylic acid and alkyl acrylates and esters (such as ethyl acrylate or methyl acrylate), acrylic-styrene copolymers, acrylonitrile-styrene copolymers, vinylidene chloride-acrylonitrile copolymers, and combinations thereof. Suitably the latex is non-halogenated. Other suitable latex materials which can be used include other vinyl, short-chain carboxylic acid copolymers, butadiene-acrylonitrile copolymer, styrene-butadiene, carboxylated styrene-butadiene, carboxylated styrene-butadiene-styrene. Urethane, PVC, acrylics or vinylidine chloride may also be used.

The precoating composition/latex may further comprise a thickener, an antibacterial, a fire retardant and/or a surfactant. A suitable antibacterial is zinc omadine - zinc-2-pyridinethiol-1-oxide. A suitable fire retardant is aluminium hydroxide. A suitable surfactant is sodium lauryl sulphate.

In one embodiment a precoating composition is used comprising: at least one copolymer derived from an acrylic or methacrylic monomer and a styrenic monomer; at least one copolymer derived from an acrylic ester and a methacrylic ester; at least one thickener; and water. The copolymer derived from an acrylic or methacrylic monomer and a styrenic monomer is suitably an acrylate/styrene copolymer dispersion such as that supplied by BASF Corporation as Acronal® S 728 na. Acronal® S 728 na is a butyl acrylate/styrene copolymer dispersion and contains water in an amount of 49 to 51%w/w and a proprietary copolymer in an amount of about 49 to 51%w/w. The dispersion has a flash point greater than 300°F (149°C), a milky white with a faint ester-like odour, a pH of about 6.5 to 7.5, a boiling point of 212°C (760mmHg), a vapour pressure of 23 mbar (20°C), a relative density of 1.04 (20°C), a viscosity of 200 to 700mPa.s and is miscible in water. This copolymer is traditionally used for coating in the paper industry but to date has not been used in the preparation of carpet tiles. Prior to addition to the precoating composition, the copolymer is suitably diluted to 25% solids with water. As indicated above the precoating composition may also contain a copolymer derived from an acrylic ester and a methacrylic ester. This copolymer facilitates the acrylic styrene sticking to thermoplastic materials such as PVC suitably used in the manufacture of the floor coverings. A suitable polymer is Acronal® AX 8281 AP available from BASF Aktiengesellschaft. This dispersion is white in colour with faint odour and a pH value of 7 to 8, a density of about 1.02 $g/cm^3$ at 20°C, a dynamic viscosity of 300 to 1500mPa.s (23°C) and a solids content of 48.5 to 51.5%. The polymeric dispersion is miscible in water. This acrylic addition raises the glass temperature in the aqueous solution. If used alone this acrylic resin is very brittle. Inclusion together with the acrylate/styrene copolymer allows the composition to stick/lock to the backing layer. Suitably about 20% dry weight of Acronal® is added (16% volume). The precoating composition suitably contains a thickener. Suitably the thickener is a thickener suitable for polymer dispersions, for example, an acrylic copolymer containing carboxyl groups. A suitable thickener is Latekoll® D available from BASF Aktiengesellschaft and is a low-viscosity, milky white anionic dispersion. Latekoll® D has a solids content (ISO 1625) of about $25\pm1$ %, a pH value of 2.3 to 3.3, a viscosity at 23°C, shear rate 250 $s^{-1}$ of 2-10mPa.s and a density at 20°C of about $1.05g/cm^3$. The thickener helps to prevent the precoating composition from wicking down holes in the primary backing layer. The thickener is suitably pre-diluted with water to form a homogeneous solution prior to the addition to the resins.

The precoating composition described above can be prepared by first mixing the copolymer derived from an acrylic or methacrylic monomer and a styrenic monomer and the copolymer derived from an acrylic ester and a methacrylic ester followed by addition of the thickener which has been pre-diluted with water, followed by addition of additional water. About 20% (of the dry weight of S728) of the AX8281 Acronal® is suitably added to the Acronal® S728 and suitably 1 to 2wt% (up to 5%) of thickener added. It is important not to add too much thickener as strike through of the primary backing may occur. It is also important not add thickener to the base material followed by addition of water as the composition may overthicken locally. It is also important not to add the water/thickener solution too quickly to the Acronal® as this will result in curdling and an ineffective solution. The amount of AX8281 can range from 10% of the dry weight of S728 up to 40%, for example 20 to 35%. When present, the antibacterial, fire retardant and surfactant may be added at the end of the mixing cycle after the addition of water and thickener.

Application of the latex/precoating composition to the primary backing layer

The latex/precoating composition can be applied to the primary backing by roller coating, spraying or by foaming. The amount of latex/precoating used for a 850g/m$^2$ carpet can be up to 100g/m$^2$. The latex/precoating composition serves to lock in the fibre on the back of the primary, such as a tufted back layer and acts as a barrier, separating the fibrous carpet from the underlying backing. The pre-coating is suitably heated to drive off sufficient water to provide a solid barrier and to allow for possible cross-linking. In this regard, heating is achieved using microwave energy and a suitable apparatus includes a microwave generator for generating microwaves; a single pass or multipass slotted waveguide applicator; and means for forwarding a primary backing layer having an uncured latex precoat provided thereon into the waveguide.

The apparatus is suitably housed in a chamber. The precoated primary backing layer is suitably passed into the chamber to be heated by microwaves in the waveguide applicator to provide for curing of the precoat.

A split or resonator slotted waveguide may be used. Alternatively a serpentine (meandering) travelling wave applicator may be used. A serpentine applicator is basically a series of slotted waveguide applicators connected by 180°C bends. By use of such an applicator, each pass has a highly uniform E-field and relatively low attenuation resulting in uniform heating.

Suitable waveguides are made from aluminium, the microwaves travelling though the waveguide with internal reflection. The width of the slot may be varied as required. As a microwave generator, suitably a 922MHz magnetron is used, although a 2.45GHz magnetron may also be used. Chokes, sinks, water and dummy loads are suitably provided to trap excess microwaves and prevent leakage.

The precoated primary backing is suitably fed into the chamber and into the waveguide applicator via a microwave transparent conveyor.

A number of heating zones may be provided in the chamber, for example, - a first zone where the precoat is applied to the primary backing and a second zone where cure occurs. Probes may be provided to determine the surface temperature in each zone. A third cooling zone may also be provided. By use of microwaves, it is possible to cure the precoated primary backing layer in 20 seconds or less.

The precoating layer has a thickness which is typically quite thin. Suitably the thickness is about 0.005mm to 0.1mm when dry. The thickness is suitably controlled by the use of spray nozzles and spray pressure. The precoating layer is suitably placed directly on and against the back surface of the loop or fibre containing primary backing and is applied in an amount to cover completely the loop backs and to lock in loops so that no mountains or valleys are evident. During processing the copolymers are cured and crosslinked. The resulting precoated product is very flexible.

Backing layer

The floor covering may include a backing layer which imparts stability and free-laying properties to the floor covering.

Prior to applying the backing layer, it is possible to shear the carpet fibres if desired. Shearing is performed to cut the closed loop, tufted yarn on the face surface and to provide for the cut, tufted yarn to have the same general height as the height of the face wear surface fibres.

The backing layer may be formed from one or more layers of a thermoplastic polymer or other suitable backing material as such as described above for the primary backing. In one embodiment the thermoplastic is a vinyl halide. A suitably vinyl halide is PVC (polyvinylchloride). Other suitable backings include bitumen, atactic polypropylene, polyolefin, ethylene vinyl acetate copolymer, thermoplastic elastomers, polyurethanes, PVC/Latex, bitumen backed latex, polyurethane, polyamines, jute, urethane, polyvinylidine chloride, polyvinyl acetate, polyvinyl butyral, natural or synthetic rubber or polychloroprene. The backing layer may be in the form of a foam, sponge or solid. When in the form of a foam, the backing layer adds resilience and/or stability.

The backing layer can have a range of properties depending on the nature of polymers, plasticizers, stabilizers and fillers used.

Generally about $2.88kg/m^2$ of PVC is required to make carpet. When using the optional precoating composition of the present invention, whilst it is possible to still use $2.88kg/m^2$, it is desired to reduce the amount of PVC to about 1kg to $2kg/m^2$, with 1.5kg to $1.6kg/m^2$ being particularly suitable and still retain the flexibility

Backing composition according to one embodiment of the invention

In one embodiment the backing is formed from a composition including a plasticizer together with a thermoplastic polymer such as PVC. A filler may also be included. In one embodiment of the invention, there is provided the use of recycled glass as filler in a PVC plastisol for the manufacture of a carpet tile. In one embodiment a composition for preparing a floor covering is used comprising: a thermoplastic resin; a plasticizer which is a mixture of an epoxidized soybean oil with an acetic acid ester of castor oil, and a filler. In another embodiment a composition for preparing a floor covering is used comprising: a thermoplastic resin; at least one plasticizer; and recycled glass.

The filler may be limestone or recycled glass or a combination of both recycled glass and limestone in any ratio of both. In a particularly preferred embodiment the filler is recycled glass. As the glass that may be used has a specific gravity of 2.0 to 2.5 and limestone a specific gravity of 2.7, less volume of glass is required than that of limestone. For example for 1357 kg of PVC paste, about 825kg of limestone filler is required whereas only 611kg of recycled glass is required.

The recycled glass fibres suitably have a particle size smaller than sand grains and are prepared by use of a ball mill so that they are round glass particles. They are typically an inert byproduct (consumer waste) and do not absorb any of the plasticizer oil whereas limestone when used may absorb about 17wt% plasticizer oil.

The recycled glass may be Enviro-glass available from Recycled Glass Mediums Australia Pty Ltd of 95 Wisemans Ferry Road Somersby NSW 2250, Australia and available in particle size ranges less than 0.106mm up to 10mm, for example 2.5mm to 1.5mm, 1.5mm to 0.75mm, 0.75mm to 0.3mm and 0.3mm to 0.106mm.

In one embodiment a $300\mu m$ or less fine is used with preference for a fine having a majority of particles of less than 200 microns.

The product may be crushed glass - colourless, blue, mixed amber, mixed green, may be odourless, inorganic solid, ground and graded glass having a melting point above 800°C, a specific gravity of about 2.5 (this value is generic, the measured specific gravity of the product may be 2) and is typically insoluble in water.

The recycled glass may contain soda lime silica glass of the following chemical composition:

| | |
|---|---|
| $Na_2O + K_2O + Li_2O$ | 12-15% |
| $CaO + MgO$ | 10-13% |
| $Al_2O_3$ | 1-2% |
| Other oxides (except $SiO_2$) | 0-1% |
| Bound silica | balance (contains no free silica). |

About 40 to 70wt% of the recycled glass may be used with respect to the total mix of plastisol. Suitably 50 to 61wt% is used.

The plasticizer may be a standard phthalate plasticizer such as DINP, DEHP, DOP, PEG 100, or PEG 200

A particularly preferred plasticizer is the combination of epoxide soy bean oil and a castor oil derivative. In view of the fact that the epoxidised soy bean oil winters (i.e. at low temperatures the oil solidifies), it is difficult to get the required viscosity and consequently when used alone, suffers from plastic migration. Epoxide soy bean oil also does not have a long shelf life. The castor oil derivative results in good viscosity and avoids uptake and migration of the soy bean oil. A suitable composition includes 30% castor oil and 70% soybean oil. A suitable range of plasticizer is 40 to 20wt% castor oil and 60 to 80wt% soybean oil. A viscosity modifier such as an alcohol may be present as required to lower viscosity. A suitable viscosity modifier is ethanol. In one embodiment 5 to 10wt% ethanol may be present.

The combination of epoxidised soy bean oil and a castor oil derivative acts synergistically. Suitably the combination is mixed at room temperature.

A suitable soy bean plasticizer is anepoxidised soya bean oil such as Lankroflex E2307 (ESBO) AG available from Swift and Company Limited, 372 Wellington Road, Mulgrave, Victoria 3170, Australia. Lankroflex E2307 is a low odour epoxy plasticizer containing pure epoxidised soya bean oil and having an oxirane oxygen content of 6.6% min, an iodine value of 2.5 max, a viscosity (30°C) of 350 c-Poise max., an acid value of 0.4 KOH mg/g max., a moisture content of 0.1% max., a specific gravity (25°C) of 0.992 $\pm$ 0.01, a refractive index (25°C) of 1.470 $\pm$ 0.002 and a colour - 120 APHA max. Lankroflex E2307 is a clear, yellow, oily liquid having a faint fatty odour and is a liquid at normal temperatures. The product has a boiling point above 200°C at 100kPa and a flashpoint of about 314°C, a specific gravity of 0.99 at 25°C, insoluble in water and a viscosity of 350 centipoise at 25°C.

The castor oil derivative is suitably an acetic acid ester of monoglycerides made from fully hydrogenated castor oil such as Grindsted® Soft-n-Safe/C available from Danisco Emulsifiers. The product has a degree of acetylation of about 0.9, an iodine value of 4 max, an acid value of 3 max, a saponification value of about 435 and is in the form of a clear liquid. The product contains octadecanoic acid, 12-(acetyloxy), bis(acetyloxy)propyl ester (about 85%) and octadecanoic acid, 2,3-bis(acetyloxy)propyl ester (about 10%). The product is a liquid at room temperature and is insoluble in water, decomposes above 300°C, and has a flash point above 100°C, a neutral odour, a density of 1.0030 g/ml at 20°C and a vapour pressure of $1.05 \times 10^{-4}$ Torr at 123.6°C.

A preferred backing layer is formed from a composition comprising recycled glass and the soy bean oil/castor oil combination. This result is a more renewable and less fossil based product. In such a combination the composition may include up to about 60% thermoplastic (fossil origin).

Optional additives and layers

The primary backing and backing layer or latex/precoating composition may include any one or more of flame or fire retardants, inert fillers such as limestone or barytes, calcium oxide, carbon-black, antibacterials, surfactants, defoamers, thickeners, dispersing agents, elastomers, antioxidants, colourants, hardeners, plasticizers, UV/heat stabilizers, viscosity modifiers, cross-linking agents and/or tackifiers.

The use of a plasticizer in combination with the thermoplastic resin provides the required flexibility, durability and hardness. The presence of a heat stabilizer stabilizes the thermoplastic and prevents thermal decomposition, a UV stabilizer stabilizes the thermoplastic preventing decomposition as a result of exposure to UV light, calcium oxide ensures any moisture is removed from the mixing process, calcium carbonate (limestone) acts as filler, increasing the volume of the thermoplastic compound mix at reduced cost and a viscosity modifier maintains viscosity to ensure that the mix remains well mixed and in suspension (slowing the dropping out of solids).

The floor covering may include one or more woven or non-woven layers of glass, fibreglass, polyester, Nylon® or polypropylene such as tissue, mesh or fleece or scrim sheet materials or a combination thereof in the primary backing and backing layer. The scrim material may be employed adjacent to the primary backing or closely adjacent thereto. Glass fibre or tissue materials may be employed within the thermoplastic backing layer to impart dimensional stability and improve laying properties of the carpet tile. Cushion layers for example, formed of foam may also be included.

The underside of the backing layer may be provided with an adhesive with a strippable protective layer attached thereto, where, in use the protective layer is stripped off and the floor covering applied to the floor surface or applied with a pressure sensitive adhesive.

Application of the backing layer and preparation of the carpet tile

The floor covering may be prepared in any suitable manner. For example, a layer of thermoplastic may be applied/cast in a defined thickness onto the underside of the cured precoated primary backing layer as a wet plastisol. The coated material is levelled with a doctor blade which levels and smooths the thermoplastic layer and forces the thermoplastic layer into engagement with any glass scrim and the primary backing.

Alternatively, the backing layer may be preformed on a releasable support such as a fluorocarbon, glass fibre endless belt, Teflon® coated fibreglass belt or stainless steel support through casting. The precoated primary backing layer is then laid into the liquid/paste backing layer.

Following application of the backing layer, the carpet is suitably heated to fuse/gel and cure the thermoplastic, cooled and optionally cut into carpet tile sections. Heating may be way of a heater, radiant panels or heating elements. The heating cures the thermoplastic material and for a tufted carpet, thereby locks back stitches in place, the primary backing is thereby bonded to the backing layer by fibres of the primary backing being embedded in the backing layer. The carpet tile may be heated to a curing temperature within the range of 50°C to 175°C, for example 90°C to 170°C, 90°C to 160°C, 100°C to 150°C or 140°C to 150°C. For example for PVC, the plasticizer melts and begins diffusing into particles at 50°C, gelation begins at about 50°C and continues to about 130°C, at which point the particles swell, between 130°C and 170°C the gelation stage ends. At 91°C the polymer flows into a continuous mass.

A suitable apparatus for finishing the carpet tile may be an apparatus including a heater having a chamber to operate at a desired temperature and through which the primary backing and backing layers pass to be heated to provide for plastic deformation of the backing layer. A pair of press rollers may suitably be provided to which the primary backing, backing and any additional cushion layers are delivered, after the primary and backing layers have been heated by the heater, to apply a force thereto to cause the layers to bond. A controller may be operatively associated with the heater, the controller being configured to maintain the temperature within the chamber to provide for heating of the backing layer so that the backing layer is relatively deformed by the rollers to bond the layers.

During gelling or after gelling the carpet may be passed under an embossing roller which embosses the back of the carpet with indentations, corrugations or the like to form a friction-increasing surface (resisting movement and maintaining position when placed in situ) and assists in consolidating the layers into a unitary product. The consolidated carpet material may then be severed by suitable cutting means into appropriate length sections (for example into squares). The laminated construction may be cooled for example to about 105°C to allow removal of the construction from the support. The construction may then be passed through a heater and raised to about 100°C prior to being engaged by an embossing roller that embosses the thermoplastic layer.

In one embodiment, the backing layer is formed of a layer of thermoplastic such as PVC, a fibreglass scrim and a second thermoplastic layer such as PVC. The first layer of thermoplastic bonds the primary backing to the fibreglass layer, the thickness of the layer suitably being controlled by a doctor blade. The fibreglass layer is to ensure dimensional stability of the carpet tile. The second layer of thermoplastic glues the layers above it and provides the final backing of the carpet tile. The thickness of this layer is also suitably controlled by a doctor blade.

The backing layer may be applied to the primary backing in a continuous fashion to produce an indeterminate length of material which may be subsequently cut as desired to form the carpet tile.

The thickness of each layer may vary depending on whether a solid layer or foam layer is used. For example, the first PVC layer range is dependant on the weight of the PVC backing i.e., 2.64kg/m$^2$ would be two layers of 0.88mm, 2kg/m$^2$ would be two layers at 0.67mm, while 1.5kg/m$^2$ would be two layers at 0.5mm. The overall carpet thickness may suitably be between about 4 and 12 mm, for example about 6mm without foam backing and about 10mm with foam backing.

Application

The resulting floor covering is suitable for use as a floor covering in home and/or commercial use. Pressure sensitive adhesives may be required for installation and where floor tiles are prepared, the floor tiles can be replaced or rotated as desired.

By use of microwave curing, the production time is shortened and costs minimised. There is a reduction in the total energy used.

The present invention provides a viable microwave carpet web processing method which can be conducted continuously for the rapid curing of latex and interlock precoats such as EVA. High energy efficiencies can be achieved over present curing methods.

The following Examples show preferred embodiments of the invention but should not be construed as limiting on the invention. The Examples show that rapid curing of latex using microwaves is possible.

Because the microwave technology is supplied by electricity instead of natural gas fired ovens, an objective is met to find alternatives to use of non-renewable natural gas.

**Examples**

The dielectric properties ($\varepsilon$) of any material is one of the main parameters that influences how microwave energy is coupled into the material and how efficiently this energy is converted into thermal energy. These properties are represented by the following equation:

$$\varepsilon = \varepsilon' - j\varepsilon''$$

where $\varepsilon'$, the dielectric constant, represents the ability of the material to store energy when a microwave field in applied, and $\varepsilon''$ represents the loss factor and determines how readily the microwave energy is converted into heat within the material.

When materials are subjected to electromagnetic fields, there are various mechanisms which provide energy storage and conversion to heat. Ionic conduction and dipole rotation are the two dominant mechanisms of heating for a solution.

Typically as material heats, the dielectric loss factor increases. This can lead to an effect known as thermal runaway (where hotter parts of the workload are heated preferentially) which promotes non-uniform heating. The increase in the dielectric loss factor can also be an advantage. If the temperature of a material can be increased to a suitable level (for example, by using a preheating step using conventional means or by including an additive which has a higher dielectric loss factor), microwave heating can be used to bring the product up the final required temperature. It follows that a knowledge of dielectric data is desirable in the design of any microwave heating system because it allows estimates to be made of the power density, the associated electric field stress and penetration depth in the processing material.

One of the main concerns in any microwave heating system is the penetration depth of the power flux into the workload. It gives a direct understanding of the heat distribution and hence heating uniformity. The penetration depth refers to a wave passing into a dielectric whose amplitude is diminishing due to power absorption as heat into the material. The intensity of the wave field and power flux density fall exponentially with distance from the surface. The rate of decay is a function of the complex dielectric constant $\varepsilon$ referred to above, which comprises the real component $\varepsilon'$ and the loss factor $\varepsilon''$. The penetration depth $D_P$ is defined as the depth into the material at which the power flux has fallen to 37% (1/e) of its value on the surface. The dielectric constant of the material being processed provides insight into the electromagnetic behaviour of the wave inside the material and allows the criteria for designing an appropriate apparatus to be defined.

The relationship between $D_P$ and the dielectric properties of a material can be described using the following formula for low loss dielectrics:

$$D_p \approx \frac{\lambda_0 \sqrt{\varepsilon'}}{2\pi\varepsilon''}$$

The formula shows that penetration depth is proportional to the wavelength of the incident microwave energy, thus higher frequencies will achieve lower penetration into the workload given the dielectric properties are similar at both frequencies.

As penetration depth only refers to the distance into the material where the power flux density has decreased to 37% of its surface value, the corresponding temperature will be directly related to the exponential decay in power the deeper into the material.

In the following examples, tests were undertaken to assess the suitability of using microwaves to cure latex on a continuous basis. The trials included static trials of latex and high power trials (using a high power microwave generator).

**EXAMPLE 1**

A series of experimental trails were undertaken to ascertain the feasibility of using microwaves as a heat source to process uncured latex precoat. Tests were carried out in a variety of different cavities at different frequencies in order to gain a thorough understanding of the product and possible issues associated with the heating. In the Experiments latex was placed in the applicator sandwiched between two pieces of material with a low dielectric loss factor, such as Teflon® or mica. This allowed pressure to be distributed evenly over the whole load if required and also allowed insulation to be placed on either side of the sample being processed to reduce heat loss to the surroundings.

Initial testing was conducted in a 900W, 2.45GHz microwave oven with further tests to be undertaken with a 30kW 922MHz generator. The experiments were conducted on tufted carpet samples comprising of Nylon 6 and Nylon 6.6 tufted carpet which was tufted into a non woven polyester primary backing. Foamed EVA Latex Compound (76%) solids was applied by a hand roller into the back of the tufted carpet and heated in the microwave for 2, 3, 4 and 5 min. The results are shown in table 1 below.

Table 1 Microwave Experiments with Processing of Uncured Latex 900W, 2.45GHz microwave oven

Per Sample 250mm x 250mm

| Time of Exposure | Starting Weight of Carpet | Latex Weight Applied Wet | Weight after Microwave | % remaining mositure | Weight after Oven Dry | Latex Weight Applied Dry |
|---|---|---|---|---|---|---|
| 2 min | 51.20 grams | 76.45 grams | 111.50 grams | 2.01% | 109.30 grams | 58.10 grams |
| 3 min | 53.60 grams | 86.71 grams | 122.70 grams | 2.68% | 119.50 grams | 65.90 grams |
| 4 min | 53.20 grams | 91.58 grams | 123.30 grams | 0.41% | 122.80 grams | 69.60 grams |
| 5 min | 50.80 grams | 99.61 grams | 126.50 grams | 0.00% | 126.50 grams | 75.70 grams |

Per square metre of carpet

| Time of Exposure | Starting Weight of Carpet | Latex Weight Applied Wet | Weight after Microwave | % remaining mositure | Weight after Oven Dry | Latex Weight Applied Dry |
|---|---|---|---|---|---|---|
| 2 min | 819.20 grams | 1223.16 grams | 1784.00 grams | 2.01% | 1748.80 grams | 929.60 grams |
| 3 min | 857.60 grams | 1387.37 grams | 1963.20 grams | 2.68% | 1912.00 grams | 1054.40 grams |
| 4 min | 851.20 grams | 1465.26 grams | 1972.80 grams | 0.41% | 1964.80 grams | 1113.60 grams |
| 5 min | 812.80 grams | 1593.68 grams | 2024.00 grams | 0.00% | 2024.00 grams | 1211.20 grams |

In all cases the EVA Latex compound appeared to have cured with similar appearance to latexed carpet cured in a conventional latex oven. Normal application rates are 750 gm/m2 dry so results show that even in extreme over coating microwave processing is successful. It was found that using a 900W, 2.45GHz microwave system that a sample of uncured latexed Carpet could be cured in less than 20 seconds.

The main outcomes of this study are that rapid curing of uncured latex compound can be achieved using microwave energy.

The following are some general conclusions the need to be considered in designing a system for curing a latex precoat:

- For a given electric field E the absorption of energy depends on $\varepsilon''$. The effectiveness of heating will depend as much on the design of the applicator (oven) as on the loss factor of the material.
- The above equation shows that penetration depth is greatly affected by frequency (or wavelength $\lambda_0$). Generally penetration depth at 2.45GHz is approximately 30% of that at 922 MHz due mainly due to the frequency effect.
- The choice of frequency is basically between using multiple magnetrons operating at either 2.45GHz maximum rated power 30kW or larger power magnetrons operating at 922MHz rated maximum power 100kW. Some facts about each approach are listed below:
- Magnetron efficiencies are between 50-70% for 2.45GHz compared to 80-87% for high power 922MHz.
- Applicator dimensions and complexity increases as the number of individual magnetron sources increases.
- In multiple magnetron installations, magnetron life is reduced due to cross coupling of power.
- Multiple magnetron systems provide a high degree of redundancy.
- Penetration depths are significantly larger at 922 MHz than at 2.45 GHz.
- Waveguide sizes for 2.45 GHz are significantly smaller than that for 922 MHz. The larger size makes it easier to use single mode cavities as they are physically bigger.
- Suitably a frequency of 922 MHz is chosen. The main reason for this choice is a higher maximum power of 100kW, a higher penetration depth resulting in more even heating and a larger waveguide size.
- An issue with microwave heating is non-uniform field strength over the product and accordingly it is necessary to give careful attention to minimise standing waves and edge effects and boundary field distortions caused by attenuation by absorption of the microwave power over the length of the product. In this regard each unit length of product absorbs a certain amount of power which means there is less power and therefore a weaker E-field for the next unit length. It follows that care should be taken when selecting process variables such as slot length, power levels, use of split or resonant applicator, to ensure the variation in E-field strength over the width of the product is reduced.

- A single pass with low attenuation is not very efficient as most of the power is wasted. To overcome this, several slotted waveguide applicators in series may be used, each applicator using the remaining power from the previous applicator. In this way most of the power can be absorbed after multiple passes resulting in a high total percentage of absorption.

- Small discrete products may be fed through the waveguide parallel to the direction of microwave propagation whereas larger webs can be fed through slots in the broad faces of the waveguide perpendicular to the direction of propagation. Small discrete objects are more likely to be affected by boundary field distortions because there is a higher boundary to material ratio than in the case of a continuous product. Field distortions give rise to increased heating at the ends of objects and if left unchecked can cause damage to the product through overheating. This issue may be overcome by introducing an axial component to the E-field by adding corrugations to the broad face of the waveguide. Larger webs heated via a slotted waveguide are more likely to be affected by uneven field strength caused by the attenuation of the microwave power by the product.

- If the variation in E-field strength over the width of the product can be reduced, more even heating can be achieved. A single pass with low attenuation is not very efficient as most of the power is wasted and any possible increase in temperature is severely limited. To overcome this, several slotted waveguide applicators in series may be used, each applicator using the remaining power from the previous applicator. In this way most of the power can be absorbed after multiple passes resulting in a high total percentage of absorption. The main method to achieve this is to use a serpentine (or meandering) travelling wave applicator. A serpentine applicator is a series of slotted waveguide applicators connected via 180° bends. Each pass has a high uniformity of the E-field due to a relatively low attenuation which results in uniformity of heating.

- Care should also be taken to minimise leakage from the slots provided in the centre of the broad face of the waveguide which are inherently non-radiating due to their placement in relation to the flow of current on the waveguide wall but which may disturb the E-field and wall currents.

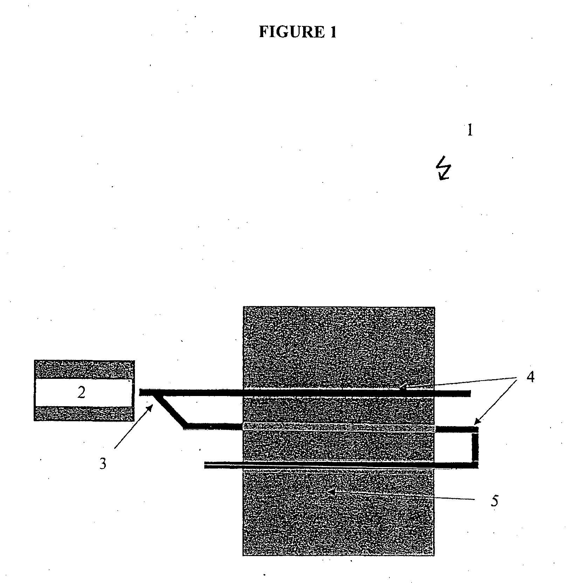

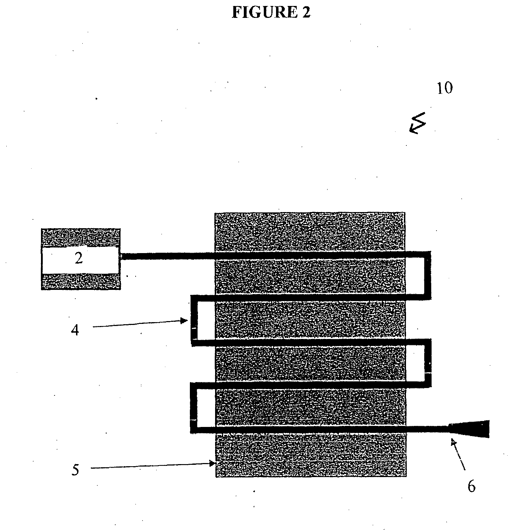

Two designs of suitable apparatus for microwave treatment of latex/precoated latex primary backing layer are shown in Figures 1 and 2. Both designs involve the equipment being specifically designed to suit the application. In Figure 1 the microwave system requires two slotted waveguides with energy feeding into each side of the web being processed via a power splitter. The second case requires a slotted waveguide that meanders across the latex web to achieve a number of passes. In this case the applicator is continuous so only two choke sections are required.

With reference to Figure 1, the apparatus (1) comprises a microwave generator (2), a single mode travelling wave applicator (4) and a water load (6, see Figure 2). The components are suitably provided in series. Additional items which may be included but not shown include a circulator, directional coupler and/or a tuner. A means for forwarding an uncured preocated primary backing into the waveguide applicator is also provided (but not shown in the drawing).

The generator contains the power supply, magnetron and waveguide launcher and provides microwave power output levels of typically of between 5 to 30 kW at a frequency of 922MHz. Power is transmitted through the waveguide (suitably a hollow rectangular tubing) to the water load. The microwave power used will depend on the product. Process variables such as heating rate and final temperature are best controlled by varying the microwave power. The generator houses most of the control devices associated with the system.

The single mode travelling wave applicator was chosen because it gives a stable E-field with the maximum field strength in the centre of the broad face. In theory by aligning the sample to be heated with this maximum E-field running the length of the cavity, even heating can be achieved. In the Figure, the single mode travelling wave applicator includes two slotted waveguides with energy fed into each side of the latex web (5) being processed via a power splitter (3). A microwave power splitter is suitably used to achieve even heating and an even power profile across the whole web. The gap associated with the microwave slot is no larger than 35mm, more suitably no more than 30mm, otherwise radiated emissions will require significant choking.

The water load or dummy load is specifically designed to absorb large amounts of power in a microwave heating system. A water load is used for two reasons: (i) to absorb any remaining power after the product has been heated and (ii) to prevent the formations of a standing wave formed by the reflection of the microwaves off the back wall of the applicator. In single mode applicators, a standing wave can be created by short circuiting the applicator. A short circuit is simply something which completely blocks the propagation of microwaves, causing the power to be reflected. This is undesirable as a standing wave introduces a significant level of unevenness in the E-field strength. At the point of reflection, there is a minimum in the E-field which is repeated every ½ wavelength in the waveguide. There is also a maximum at every half wavelength starting a quarter wavelength from the reflection. This causes hot spots in the heated material.

Following the flow of power from the magnetron, a circulator may be provided which eliminates problems associated with microwave applicators that are prone to reflected energy (empty cavity condition). If the reflected energy is allowed back to the launcher, the reflected energy can be reabsorbed by the magnetron causing premature ageing and hence device failure. A circulator is therefore suitably placed directly after the magnetron. The circulator acts as a one-way valve allowing energy to pass from the magnetron to the rest of the circuit but prevents any reflected energy from being returned to the magnetron. The reflected energy is suitably directed into a dummy load (similar to a water load) and is dissipated into a constant flow of water.

The circulator is suitably followed by a directional coupler which enables the measurement of the forward and reflected powers at that point - the difference being the net power to the remaining circuit components. The directional coupler samples a portion of the power in each direction, this is then measured and the power determined from the "coupling factor".

A tuner when provided allows a wide range of varying load/applicator impedances to be matched to the microwave network. Reflected power is due to impendence mismatches and the tuner acts as a matching element allowing an impedance transformation to take place, thus reducing the reflected power and improving the net power transfer to the applicator/load. The tuner comprises variable length stubs mounted in the waveguide, which when varied affect both the series and parallel reflectance.

Suitable technical specifications include one magnetron of a certain kW operating at a 922 MHz frequency with 3 phase electrical requirements (power to be determined) and a water load.

Another suitable apparatus (10) is shown in Figure 2. In this embodiment, the waveguide of Figure 1 is replaced with a slotted waveguide that meanders across the web to achieve a number of passes. One generator source is suitably required to achieve even heating. In this case the applicator is continuous so only two choke sections are required. Suitably the waveguide is slotted at the centre of its broad faces so the latex/uncured precoated primary backing layer lies in the maximum electric field which will provide excellent coupling with the microwave energy. A number of passes may be required to ensure efficient and even energy distribution. Suitably the area between waveguide runs is enclosed to reduce leakage. An advantage of this embodiment is the ability to more evenly heat the web.

The applicator length is greater than that of Figure 1 so a longer conveyor system is required. The radiated emissions should be lower than for the single pass applicator of Figure 1 due to the higher level of absorbed power. In order to ensure the reflected waves and uneven heating are minimised, a water load is required at the end of the waveguide. The gap associated with the microwave slot suitably is no larger than 30mm.

Suitable technical specifications include one magnetron of a certain kW operating at a 922 MHz frequency with 3 phase electrical requirements (power to be determined) and a water load.

Each apparatus is suitably is fitted with at least one microwave choke ensuring maintenance of international occupational safety limits for leakage radiation, for example to comply with Australian standard AS2772.1 - 1998 "Maximum Exposure levels - 100kHz to 300GHz" and the European Committee for Electromechanical Standardization (CENELEC) pre-standard ENV 50166-2.

In use the microwave generator provides the electromagnetic energy. Microwaves produced inside the generator are propagated along the waveguide and then into the applicator (the zone where the waveguide is in proximity with the uncured latex). Energy entering the applicator is then absorbed by the latex causing an increase in temperature and hence curing of the product.

The temperature and heating rate of the latex can be controlled by changing the output power from the microwave generator. This can done manually while processing or can be automatically modified depending on the control scheme. The best control method is to keep the web speed constant and modify the microwave power to control variables such as final temperature and heating rate. The control method also allows varying amounts of product to be processed - if a smaller amount is required, the power can be reduced to match the load. It is possible to measure the output temperature of the product and modify the power levels automatically for a set final temperature. As outlined above, the uncured precoated primary backing is suitably fed through the applicator by a microwave transparent conveyor. The material thickness will suitably need to be controlled to ensure even heating. A standard latex foaming applicator before the microwave cavity is a possible solution.

The process is suitable for curing latex and other materials in the carpet tile (for example nylon, polyester) do not absorb any microwaves so that once cure has occurred, it is difficult to overcook or burn the carpet.

This Example shows that rapid curing of latex/precoats can be achieved using microwaves.

## EXAMPLE 2

The experiments conducted in Example 1 were small scale static laboratory tests with samples of latex inside microwave ovens and/or in experimental wave guide applicators. The challenge was to apply the method to a continuous process and design a microwave heating apparatus for curing latex.

In this regard, it would be desirable to determine dielectric properties of latex. Knowledge of these dielectric properties is desirable if a suitable applicator is to be designed. The easiest method to determine the dielectric properties of latex is to calculate the rate of microwave energy absorption of the latex, suitably using a Network Analyser. A Network Analyser produces microwaves over a set frequency range at a very low power level (the energy level is lower than that of a typical mobile phone). The Network Analyser can be set up to transmit energy through the latex and the amount of energy detected by the device after it has passed the latex is recorded. The difference in the energy levels is the energy absorbed by the uncured latex.

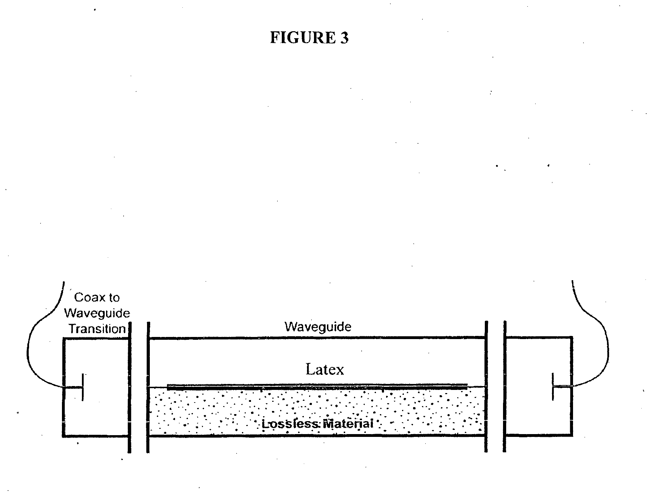

Figure 3 shows a suitable test set up for low power testing of latex. The highest field strength is found down the centreline of the waveguide so lossless material, which is transparent to the microwaves and not heated by them, is used to support the latex in the correct location. Energy is transmitted to and from the network analyser to the applicator via coaxial cables, so coaxial to waveguide transitions are required on each end of the applicator.

The energy passed from one end of the test setup to the other and the attenuation, or reduction in energy level can be recorded. This allows the dielectric properties to be calculated so that a workable prototype can be created using computer modelling software. The results may then be fed into a computer simulation/modelling program to compare various designs of the wave guide applicators (including changes to the slot dimensions and the addition of various ridges) and their effect on field pattern and absorption.

It is envisaged that a meandering waveguide setup (with or without ridges) may be the most appropriate for the curing of latex in a continuous manner. This applicator can then be designed and constructed and mounted on a conveyor system.

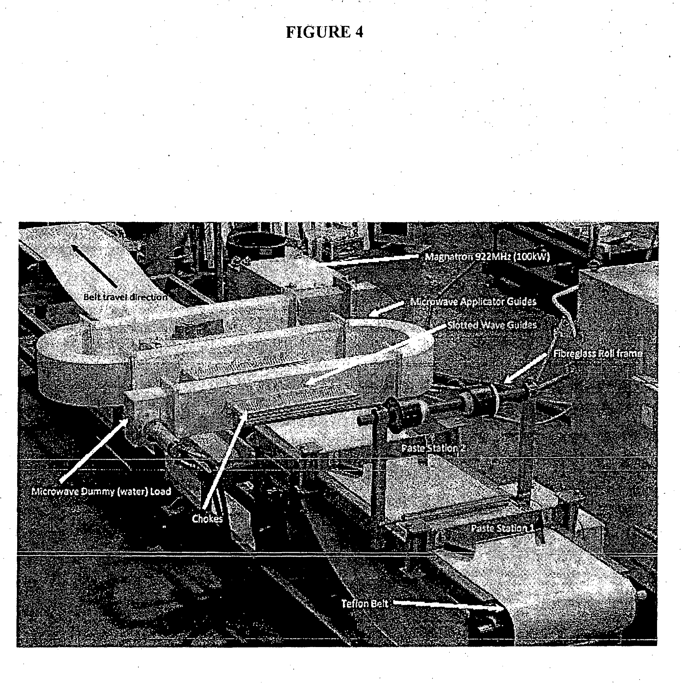

Figure 4 is a photograph of the actual apparatus used for testing. The apparatus was in fact designed and built for processing PVC and included an experimental 500mm wide line capable of running up to a maximum current line speed of 12 lineal metres per minute. The apparatus included a multipass (serpentine) slotted wave guide applicator. It was determined that three passes would be sufficient. Ridges were not used. Slot dimensions were determined using simulation software for PVC but these would be altered for latex. From there it was a matter of sizing the chokes appropriately and then fabricating. The design was integrated with the conveyor frame with minimal modifications. Latex was applied using two spreaders shown in the bottom right of the figure. A water load, shown on the left hand end of the bottom most waveguide pass was used to absorb any leftover energy. The water load prevented the formation of any significant standing waves by absorbing the power remaining after the passes of the latex. Without the water load all remaining energy would be reflected back through the applicator resulting in uneven heating. The water load could also be used to calculate how much energy was absorbed by the latex by measuring how much was passed through to the water load by measuring the temperature rise in the water.

Some carpet pile was run down the line using the second doctor blade to apply both EVA Latex and Interlok™ (an acrylic based latex) to the back of the carpet.

Whilst the microwave applicator on this line was specifically designed for the dielectric properties of PVC it was possible to cure both EVA Latex and Interlok™. The application rate of both pre-coats was not very accurate and the EVA application was about 50% higher than standard and Interlok™ 100% higher.

The EVA Latex appeared to skin over and due to a solid Teflon belt underneath the remaining moisture was trapped. However Tuftlock test results on both pre-coats showed higher than standard results - see the following Table.

Also noted in the trial was significant shrinkage across the width, indicating that curing on a tenter may be required. It could also be a fact of the skinning of the Latex and entrapment of some of the moisture.

**Table - Pre-Coat test results**

| Tuftlocks | | | | | | |
|---|---|---|---|---|---|---|
| Sample # | Weight | Weight g/sqm | Mean | STD Deviation | Coefficient of Variance | Total Newtons |
| No Precoat | 34.0 | | | | | |
| Interlok™ | 43.4 | 235 | 40.1 | 11.6 | 28.96 | 1203.8 |
| Latex 1 | 80.4 | 1160 | 51.7 | 7.1 | 13.66 | 1551.1 |
| Latex 2 | 83.6 | 1240 | 57.5 | 16.0 | 27.79 | 1724.0 |

A rough value has been calculated of;

- 50-80kW for EVA Latex at 1m/min (2 m wide web)
- 43kW for Interlok™ at 1m/min (2m wide web)

these results are scalable for higher belt speeds.

A suitable apparatus may include foam applicators for the pre-coat and topical (a stain block solution applied to the full fibre). The apparatus may be a tenter or belt style line.

A full scale line may be proposed. The full scale line would include 2 off 100k generators, 2 off meander style applicators with at least 3 and up to 5-7 passes each to absorb enough power to make the system efficient), 2 off water loads and moisture removal and a SCADA control system and would be able to achieve present line speeds of 11 meters/minute. Belt widths may be 2 metres. The heating zone may be 19 metres or less. It may be appropriate to determine how and where to laminate carpet by finding the gel point of the latex through the microwave applicator.

The applicator will preferably feature two meandering sections and feed from the same or preferably opposite sides of the belt to increase the evenness of heating. If less passes are used, the system becomes progressively less efficient requiring an increasing level of connected power. The heating profile is more even with the more passes used. The heating profile is also more even if the power is fed from both sides.

With regard to the construction of feeds from either side, this system may have an additional waveguide run before the applicator to get the feed on the other side of the belt. The choke system would be continuous between the two parts of the applicator to ensure that any leakage is contained. The operation of the microwave generators would be combined so one operation would control both power outputs. A moisture removal system (such as hot air dryers) may also be included. In use hot air dryers will blow air across the width of the belt via a tube on one end of each of the passes. Hot air moving across the belt and out through the choke section will thereby removing steam. The hot air will also heat up the walls of the waveguide reducing the likelihood of condensation.

**Claims**

1. A method of making a floor covering comprising:

   tufting or implanting a fibrous material or yarn into a primary backing;
   precoating the underside of the primary backing layer by applying a latex precoating composition followed by microwave curing the precoating composition;
   **characterized in that**

   - the method is conducted continuously; and
   - the precoated primary backing layer is passed into a chamber to be heated by microwaves in a waveguide applicator to provide for curing of the precoat; and
   - the microwaves are generated by means of a 922MHz or a 2.45GHz magnetron; and
   - the microwave curing is conducted for 20 seconds or less.

2. A method of making a floor covering according to claim 1 comprising:

   tufting or implanting a fibrous material or yarn into a primary backing;
   precoating the underside of the primary backing layer by applying a latex precoating composition followed by microwave curing the precoating;
   applying a backing layer to the precoated primary backing layer; and
   if necessary curing the backing layer.

3. A method of making a floor covering according to claim 1 comprising:

   coating a first layer of a thermoplastic resin plastisol on a support surface;
   optionally placing a dimensionally stable sheet material onto the top surface of the first layer and heating the layer to gel the layer and position the sheet material;
   optionally applying a second layer of a thermoplastic resin plastisol onto the gelled surface of the first layer;
   tufting or implanting a fibrous material or yarn into a primary backing material;
   precoating the underside of the primary backing with a latex precoat and curing the precoat using microwaves;
   optionally coating a thermoplastic resin plastisol over the precoat layer;
   layering the precoated primary backing onto the top surface of the plastisol of the first or second thermoplastic resin layer to form a floor covering;
   heating the floor covering so formed to fuse the thermoplastic layers into an integrally fused backing layer;
   cooling the flooring covering; and
   optionally cutting the floor covering into a carpet tile.

4. A method of making a floor covering according to claim 3 comprising:
   using a pair of press rollers to apply a force to the primary and backing layers, after they have been heated, to cause the layers to bond.

**5.** A method of making a floor covering according to any one of claims 1 to 4 wherein the waveguides are made from aluminum.

**6.** A method of making a floor covering according to any one of claims 1 to 5 wherein a split or resonator slotted waveguide is used.

**7.** A method of making a floor covering according to any one of claims 1 to 5 wherein a serpentine travelling wave applicator is used.

**8.** A method of making a floor covering according to any one of claims 1 to 7 wherein the precoated primary backing is fed into the chamber and into the waveguide applicator via a microwave transparent conveyor.

**Patentansprüche**

**1.** Ein Verfahren zur Herstellung einer Bodenabdeckung umfassend:

Tufting oder Einsetzen eines Fasermaterials oder Garns in eine erste Stütze;
Vorbeschichtung der Unterseite der ersten Stützschicht durch Aufbringen einer Latexvorbeschichtungszusammensetzung, gefolgt von Mikrowellenhärtung der Vorbeschichtungszusammensetzung;
**dadurch gekennzeichnet, dass**

- das Verfahren kontinuierlich durchgeführt wird; und
- die vorbeschichtete erste Stützschicht in eine Kammer geleitet wird, die durch Mikrowellen in einem Wellenleiter-Applikator erwärmt wird, um das Aushärten der Vorbeschichtung zu ermöglichen; und
- die Mikrowellen mittels eines 922 MHz oder 2,45 GHz Magnetrons erzeugt werden; und
- die Mikrowellenhärtung für 20 Sekunden oder kürzer durchgeführt wird.

**2.** Ein Verfahren zur Herstellung einer Bodenabdeckung nach Anspruch 1 umfassend:

Tufting oder Einsetzen eines Fasermaterials oder Garns in eine erste Stütze;
Vorbeschichtung der Unterseite der ersten Stützschicht durch Anwendung einer Latexvorbeschichtungszusammensetzung gefolgt von Mikrowellenhärtung der Vorbeschichtung;
Aufbringen einer Stützschicht auf die vorbeschichtete erste Stützschicht; und
gegebenenfalls Aushärten der Stützschicht.

**3.** Ein Verfahren zur Herstellung einer Bodenabdeckung nach Anspruch 1 umfassend:

Beschichten einer ersten Schicht aus einem thermoplastischen Harzplastisol auf einer Trägeroberfläche;
gegebenenfalls Anbringen eines räumlich stabilen Bahnmaterials auf die Oberseite der ersten Schicht und Erhitzen der Schicht, um die Schicht zu gelieren und das Bahnmaterial zu positionieren;
gegebenenfalls Aufbringen einer zweiten Schicht eines thermoplastischen Harzplastisols auf die gelierte Oberfläche der ersten Schicht;
Tufting oder Einsetzen eines Fasermaterials oder eines Garns in ein erstes Stützmaterial;
Vorbeschichtung der Unterseite der ersten Stützschicht mit einer Latexvorbeschichtung und Aushärten der Vorbeschichtung unter Verwendung von Mikrowellen;
gegebenenfalls Beschichten mit einem thermoplastischen Harzplastisol über die Vorbeschichtungsschicht;
Schichten der gegebenenfalls vorbeschichteten ersten Stütze auf die Oberseite des Plastisols der ersten oder zweiten thermoplastischen Harzschicht, um eine Bodenabdeckung zu bilden;
Erhitzen der so gebildeten Bodenabdeckung, um die thermoplastischen Schichten zu einer integral-verschmolzenen Stützschicht zu verschmelzen;
Abkühlen der Bodenabdeckung; und
gegebenenfalls Schneiden der Bodenabdeckung in eine Teppichfliese.

**4.** Ein Verfahren zur Herstellung einer Bodenabdeckung nach Anspruch 3 umfassend:
Verwenden eines Paares von Presswalzen, um nach Erhitzen eine Kraft auf die erste Stützschicht und die Stützschichten anzuwenden, um die Schichten zu verbinden.

5. Ein Verfahren zur Herstellung einer Bodenabdeckung nach einem der Ansprüche 1 bis 4, wobei die Wellenleiter aus Aluminium gefertigt ist.

6. Ein Verfahren zur Herstellung einer Bodenabdeckung nach einem der Ansprüche 1 bis 5, wobei ein geteilter geschlitzter Wellenleiter oder ein Splitresonator-Wellenleiter verwendet wird.

7. Ein Verfahren zur Herstellung einer Bodenabdeckung nach einem der Ansprüche 1 bis 5, wobei ein Serpentinen-Wanderwellen-Applikator verwendet.

8. Ein Verfahren zur Herstellung einer Bodenabdeckung nach einem der Ansprüche 1 bis 7, wobei die vorbeschichtete erste Stütze über ein Mikrowellen-durchlässiges Förderband in die Kammer und in den Wellenleiter-Applikator eingeführt wird.

**Revendications**

1. Procédé de fabrication d'un revêtement de sol, comprenant :

le tuftage ou l'implantation d'un matériau fibreux ou d'un fil dans un dossier primaire ;
la formation d'une précouche sur le dessous de la couche de dossier primaire par application d'une composition de précouche en latex suivie d'un durcissement par micro-ondes de la composition de précouche ;
**caractérisé en ce que**

- le procédé est mis en oeuvre en continu ; et
- on fait passer la couche de dossier primaire portant la précouche dans une chambre destinée à être chauffée par des micro-ondes dans un applicateur à guides d'ondes pour produire un durcissement de la précouche ; et
- les micro-ondes sont générées au moyen d'un magnétron de 922 MHz ou de 2,45 GHz ; et
- le durcissement par micro-ondes est réalisé pendant 20 secondes ou moins.

2. Procédé de fabrication d'un revêtement de sol selon la revendication 1, comprenant :

le tuftage ou l'implantation d'un matériau fibreux ou d'un fil dans un dossier primaire ;
la formation d'une précouche sur le dessous de la couche de dossier primaire par application d'une composition de précouche en latex suivie d'un durcissement par micro-ondes de la précouche ;
l'application d'une couche de dossier sur la couche de dossier primaire portant la précouche ; et si nécessaire le durcissement de la couche de dossier.

3. Procédé de fabrication d'un revêtement de sol selon la revendication 1, comprenant :

l'application d'une première couche d'un plastisol de résine thermoplastique sur une surface de support ;
optionnellement, la mise en place d'un matériau sous forme de feuille dimensionnellement stable sur la surface supérieure de la première couche et le chauffage de la couche pour gélifier la couche et positionner le matériau sous forme de feuille ;
optionnellement, l'application d'une deuxième couche d'un plastisol de résine thermoplastique sur la surface gélifiée de la première couche ;
le tuftage ou l'implantation d'un matériau fibreux ou d'un fil dans un matériau de dossier primaire ;
la formation d'une précouche sur le dessous du dossier primaire, la précouche étant du latex, et le durcissement de la précouche en utilisant des micro-ondes ;
optionnellement, l'application d'un plastisol de résine thermoplastique sur la précouche ;
la superposition du dossier primaire portant la précouche sur la surface supérieure du plastisol de la première ou de la deuxième couche de résine thermoplastique pour former un revêtement de sol ;
le chauffage du revêtement de sol ainsi formé pour fusionner les couches thermoplastiques afin d'en faire une couche de dossier fusionnée en une seule pièce ;
le refroidissement du revêtement de sol ; et
optionnellement, le découpage du revêtement de sol en une dalle de moquette.

**4.** Procédé de fabrication d'un revêtement de sol selon la revendication 3, comprenant :
l'utilisation d'une paire de rouleaux presseurs pour appliquer une force à la couche primaire et à la couche de dossier, après qu'elles ont été chauffées, afin de provoquer la liaison des couches.

**5.** Procédé de fabrication d'un revêtement de sol selon l'une quelconque des revendications 1 à 4, dans lequel les guides d'ondes sont en aluminium.

**6.** Procédé de fabrication d'un revêtement de sol selon l'une quelconque des revendications 1 à 5, dans lequel un guide d'ondes divisé ou un guide d'ondes fendu à résonance est utilisé.

**7.** Procédé de fabrication d'un revêtement de sol selon l'une quelconque des revendications 1 à 5, dans lequel un applicateur d'ondes progressives en serpentin est utilisé.

**8.** Procédé de fabrication d'un revêtement de sol selon l'une quelconque des revendications 1 à 7, dans lequel le dossier primaire portant la précouche est introduit dans la chambre et dans l'applicateur à guides d'ondes par l'intermédiaire d'un convoyeur transparent aux micro-ondes.

**FIGURE 1**

FIGURE 2

FIGURE 3

Coax to
Waveguide
Transition

Waveguide

Latex

Lossless Material

**FIGURE 4**

**EP 2 693 918 B1**

## REFERENCES CITED IN THE DESCRIPTION

### Patent documents cited in the description

- US 4798644 A

- GB 1267654 A